# EUROPEAN PATENT APPLICATION

(11) **EP 4 613 466 A1**
(43) Date of publication of application: **10.09.2025**
(21) Application number: 24161905.5
(22) Date of filing: 07.03.2024
(51) Int. Cl.: B29C 70/48, B29C 70/44, B29C 33/02, B29C 70/54

(54) **METHOD FOR MANUFACTURING A WIND TURBINE BLADE AND MOLD ARRANGEMENT**

(71) Applicant: Siemens Gamesa Renewable Energy A/S, 7330 Brande (DK)
(72) Inventor: Harboe, Niels, 9560 Hadsund (DK); Veis, Andreas, 9000 Aalborg (DK)
(74) Representative: SGRE-Association

(57) **Abstract**

A method for manufacturing a wind turbine blade (3), comprising:
a) arranging (S1) a fiber lay-up (37) in a mold (9), the mold (9) having, as seen in cross-section, at least one upper portion (18), at least two middle portions (19) and a lower portion (20),
b) infusing (S2) the fiber lay-up (37) with resin (39), and
c) curing (S3), by applying heat, the resin (39) locally in the at least two middle portions (19) such that in each middle portion (19) a barrier (42), with respect to a gravity force (F_{G}), is formed between the resin (39) in the at least one upper portion (18) and the lower portion (20).

By generating the barrier in each of the two middle portions, it can be prevented that resin in the at least one upper portion of the mold is moving due to gravity into the lower portion of the mold.

## Description

The present invention relates to a method for manufacturing a wind turbine blade and a mold arrangement for manufacturing a wind turbine blade.

One way to produce more power using a wind turbine under given wind conditions is to increase the size of the blades. However, the manufacture of wind turbine blades is becoming increasingly difficult for increasing blade sizes.

Currently, many wind turbine blades are made by pre-manufacturing parts of the blade separately (such as a pressure-side shell and a suction-side shell) and gluing the parts to each other. The parts are, for example, premanufactured by infusing composite materials such as glass fibers with a resin and curing the resin. However, the gluing process has many disadvantages. It is, for example, difficult to achieve a sufficient strength and robustness of the glueline.

In another method, disclosed in EP 1 310 351 A1, the blade is manufactured by packing composite materials for the entire blade, or for an entire lengthwise blade section, on a mandrel (mold core) and by infusing resin in a vacuum-assisted manner and curing the resin. Thereby, glue joints are avoided.

However, with increasing blade sizes and, thus, increasing blade cross-sections it becomes difficult to wet the fiber lay-up at the top of the blade amongst others due to the gravitational force acting on the infused resin. Therefore, manufacturing large wind turbine blades having for example a diameter at the root section of larger than 4.5 or 5.5 meters by vacuum-assisted infusion is challenging.

It is one object of the present invention to provide an improved method for manufacturing a wind turbine blade.

Accordingly, a method for manufacturing a wind turbine blade is proposed. The method comprises the steps:
a) arranging a fiber lay-up in a mold, the mold having, as seen in cross-section, at least one upper portion, at least two middle portions and a lower portion,
b) infusing the fiber lay-up with resin, and
c) curing, by applying heat, the resin locally in the at least two middle portions such that in each middle portion a barrier, with respect to a gravity force, is formed between the resin in the at least one upper portion and the lower portion.

By generating the barrier in each of the two middle portions, resin (e.g., liquid resin) in the at least one upper portion can be prevented from moving downwards due to the gravitational force acting on the resin. In particular, it can be prevented that resin in the at least one upper portion of the mold is moving due to gravity into the lower portion of the mold.

The heat is applied in step c) locally and only in the at least two middle portions of the mold but not in the at least one upper portion and the lower portion of the mold. Hence, the infused resin is cured in step c) only in the least two middle portions mold but not in the at least one upper portion and the lower portion of the mold. In other words, the overall curing of the resin infused in step b) into the fiber lay-up is not yet started in step c). Rather, in step c) only the resin in the at least two middle portions of the mold is heated and cured.

The quality of the resin infusion process depends on a uniform wetting of the fiber lay-up (e.g. a dry and/or semi-dry fiber lay-up). Thereby, air pockets due to entrapped air as well as dry regions due to insufficient resin flow or drifting away of resin due to gravity should be avoided. By applying heat at the at least two middle portions of the mold, the temperature of the resin in the at least two middle portions is increased and a curing process at these locations accelerated. Thereby, a barrier at each middle portion is formed. Each barrier is made of a portion of the fiber lay-up in the respective middle portion and the cured resin reinforcing the fiber lay-up in the respective middle portion.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine is connected to a foundation of the wind turbine, such as a monopile or tripod in the seabed, a floating foundation or a concrete foundation.

The wind turbine blade, e.g., its root section, is fixedly or rotatably connected to the hub. Apart from a (cylindrical) root section, the wind turbine blade is formed aerodynamically. The wind turbine blade comprises, for example, a pressure side (up-wind side) and a suction side (downwind side). The pressure side and the suction side are connected with each other at a leading edge and a trailing edge. The pressure and suction sides and the leading and trailing edges define an airfoil of the wind turbine blade.

The wind turbine blade has a fiber-reinforced laminate structure. The wind turbine blade is manufactured by arranging the fiber lay-up in the mold, infusing the fiber lay-up with resin, and curing the resin. In the proposed method, the curing process has two distinct phases. In a first curing phase in step c) of the method, only the resin in the at least two middle portions is cured. In a second curing phase after step c) of the method, the entire remaining infused resin in the mold is cured. For example, also in the second curing phase, heat may be applied at the mold, in particular at the at least one upper portion of the mold and the lower portion of the mold.

The fiber lay-up arranged in the mold includes, for example, fibers in a dry condition (i.e. without any resin), semi-dry fibers and/or pre-impregnated fibers (prepreg).

The fiber lay-up includes, for example, glass fibers, carbon fibers, aramid fibers and/or natural fibers.

In addition to the fiber lay-up also core material - such as wood, balsa, foam, PET foam and/or PU foam - may be arranged in the mold in step a). Exemplarily, the core material may be sandwiched between layers of fibers such that a fiber-reinforced resin laminate with a core structure is obtained.

The fiber lay-up is arranged in the mold in step a), for example, in the at least one upper, the at least two middle and the lower portion of the mold.

The resin is infused in step b), for example, into the entire fiber lay-up which is arranged in step a) in the mold. The resin is infused in step b), for example, in the fiber lay-up in the at least one upper portion, the at least two middle portions, and the lower portion of the mold. In other words, the resin is wetting in step b), for example, the entire fiber lay-up in the at least one upper portion, in the at least two middle portions, and in the lower portion of the mold.

The resin includes, for example, thermosets, thermoplastics, epoxy, two-component epoxy, polyurethane, vinyl ester and/or polyester.

The mold has, in particular, an inner surface forming a molding surface for casting the blade or a section of the blade. For example, each of the at least one upper portion, the at least two middle portions and the lower portion of the mold comprises an inner surface forming a molding surface.

The at least two middle portions are arranged, in particular adjacent the at least one upper portion. Further, the lower portion is arranged, in particular, adjacent the at least two middle portions.

The at least one upper portion and the at least two middle portions of the mold are, for example, continuous with each other. In other words, the at least one upper portion and the at least two middle portions are, for example, integrally formed with each other. Furthermore, also molding surfaces of the at least one upper portion and the at least two middle portions are, for example, continuous with each other.

The mold may, for example, be a mold for manufacturing the entire blade, a lengthwise section of the blade (e.g., an inboard blade section, an outboard blade section), a half-shell (e.g., suction side shell or pressure side shell) of the blade and/or a lengthwise section of a half-shell.

The curing process of thermosetting resin, such as epoxy resin, from the liquid state - in which it can be applied - to the solid state - in which the resin has reached (most of its) ultimate mechanical properties - is characterized by gelation and vitrification (glass transition). The curing process is temperature-dependent. The higher the temperature of the resin, the faster it cures. The temperature of the resin depends on the ambient temperature as well as the temperature of the surface where the resin is applied. In addition, the curing of resin can generate heat by itself. In particular, curing of epoxy resin involves an exothermic reaction in which molecules of the epoxy mixture chemically react with each other and generate heat. The amount of heat depends on the thickness of the epoxy mass or the exposed surface area of mixed epoxy. A thicker mass retains more heat, causing a faster reaction and even more heat. By applying heat in step c) of the method, the temperature of the resin in the at least two middle portions is controlled such that the resin in each of the at least two middle portions is cured and forms the respective barrier.

Each barrier is configured such that a flow of resin is stopped at the respective barrier and cannot pass the respective barrier. Hence, resin from the at least one upper portion cannot move and/or flow to the lower portion of the mold.

The heat is, for example, applied at an inner surface, i.e. the molding surface, of the at least two middle portions of the mold.

The mold is arranged during steps a) to c) of the method in a horizontal orientation such that the blade or a blade section is manufactured in a horizontal orientation. Hence, the upper, middle and lower portions of the mold are upper, middle and lower portions with respect to a height direction at the casting site. That means, the upper, middle and lower portions of the mold are upper, middle and lower portions with respect to the gravity force. In particular, the gravity force is acting in a direction from the at least one upper portion to the at least two middle portions and to the lower portion of the mold.

The at least two middle portions may, for example, be exactly two middle portions. The two middle portions are, in particular, arranged at the same height position.

According to an embodiment, at the end of step c):
a viscosity of the cured resin in each middle portion has a larger value than a viscosity of the resin in the at least one upper portion and the lower portion of the mold, and/or
the cured resin in each middle portion is in a solid and/or gelated state and the resin in the at least one upper portion and the lower portion of the mold is in a liquid state.

In particular, at the end of step c), a viscosity of the resin in each formed barrier has a larger value than a viscosity of the resin in the at least one upper portion and in the lower portion of the mold.

For example, the cured resin in each middle portion (i.e. the cured resin in each formed barrier) has a viscosity of (e.g., approximately) 1000 mPa·s or larger at the end of step c). Furthermore, the resin in the upper and the lower mold portions each have a viscosity of 300 mPa·s or lower, 250 mPa·s or lower, 220 mPa·s or lower and/or 200 mPa·s or lower at the end of step c).

In particular, the resin (e.g., a mixed two-component epoxy) during infusion has a viscosity with a value between, for example, 200 and 300 mPa·s. A resin (e.g., epoxy) for vacuum infused transfer molding requires a low viscosity during the infusion process as the driving force for the flow and wetting is the differential pressure established between the closed mold cavity and the ambient pressure outside of the cavity.

During the so-called potlife, the viscosity of the resin gradually increases as the crosslinking progresses. At the end of step c), the crosslinking progress of the resin in the upper and the lower mold portions has not yet set in or is still in a very early phase. On the other hand, the crosslinking progress of the resin in each middle portion is in a very late phase at the end of step c). This means for example that the crosslinking progress of the resin in each middle portion is (e.g., almost/essentially) finished the end of step c).

The temperature of the resin during infusion is, for example, 25°C or more and/or even 30°C or more. Infusing the resin in step b) with a high temperature of, for example, 30°C has the advantage that at the end of step c), the resin in each of the upper and the lower mold portions still has a low viscosity (e.g., of only 300 mPa·s or lower, 250 mPa·s or lower, 220 mPa·s or lower and/or 200 mPa·s). However, since a temperature increase is equivalent to an increase in energy input which causes a faster cross-linking, the temperature with which the resin is infused should not be too high (e.g., not above 30°C) but rather temperature, potlife and viscosity needs to be balanced suitably.

According to a further embodiment,
curing the resin locally in the at least two middle portions is started after the fiber lay-up in the at least one upper portion of the mold is completely wetted by resin, and/or
curing the resin locally in the at least two middle portions is started after the fiber lay-up in the mold has been infused with 70% or more, 80% or more and/or 90% or more of the total amount of resin necessary for manufacturing the blade or a section of the blade.

When starting curing the resin locally in the at least two middle portions after the fiber lay-up has been infused with 70% or more, 80% or more and/or 90% or more of the total amount of resin necessary for manufacturing the blade or the blade section encompasses that step c) is started before step b) has been finished completely.

The section of the blade is, for example, a lengthwise section of the blade. The section of the blade is, for example, a lengthwise section of the blade comprising the entire cross-section of the blade or a lengthwise section of a half-shell of the blade.

The section of the blade is, in particular, a separately manufactured blade section.

According to a further embodiment, the mold comprises at least two electrical heating elements for applying heat locally at the at least two middle portions.

Electrical heating elements provide a fast increase of the temperature at the at least two middle portions of the mold. Thus, heat can be applied at the at least two middle portions rapidly. Hence, the heat required to cure the resin in the at least two middle portions such that they form the at least two barriers can be provided rapidly, e.g., within a few minutes (e.g., within 5 to 10 minutes).

For example, a first one of the at least two heating elements is configured for applying heat at a first one of the at least two middle portions. Further, a second one of the at least two heating elements is, for example, configured for applying heat at a second one of the at least two middle portions.

Each of the electrical heating elements comprises an electrically conductive element. Each of the electrically conductive elements comprises a first and a second terminal for supplying power to the electrically conductive element. Each of the electrically conductive elements can produce heat by means of a current that is applied to the respective electrically conductive element and that is flowing between the first and second terminals of the respective electrically conductive elements. The heat produced by the respective electrically conductive element depends on the electrical resistance of the electrically conductive element and the amount of current and/or voltage applied to the electrically conductive element. Each electrically conductive element is, for example, a resistive element and/or an electrical heating element.

Each electrically conductive element can be made of a metal, for example copper, and/or carbon fibers.

According to a further embodiment, the at least two electrical heating elements are arranged at a respective inner surface of the at least two middle portions.

The at least two electrical heating elements are, for example, attached (e.g., releasably attached) to a respective inner surface of the at least two middle portions.

According to a further embodiment, each heating element comprises at least one tape and an electrically conductive element attached to and/or embedded in the at least one tape, wherein the at least one tape is attached to the inner surface of the respective middle portion of the mold.

For example, each heating element comprises two tapes and the electrically conductive element is sandwiched between the two tapes.

The electrically conductive element may be arranged parallel to a length direction of a respective tape. Alternatively, the electrically conductive element may be arranged in a zig-zag pattern and/or a serpentine pattern with an effective direction being arranged parallel to the length direction of the respective tape.

According to a further embodiment, the at least one tape comprises a polymer and/or polytetrafluorethylene.

According to a further embodiment, a thickness of each electrical heating element is 2 mm or smaller, 1 mm or smaller and/or 0.5 mm or smaller.

Having a very thin electrical heating elements, the electrical heating elements can be attached to the molding surface of the mold without leaving significant indents in the outer blade shell during casting the blade shell.

According to a further embodiment, the at least one tape is releasably attached to the respective inner surface of the respective middle portion.

The at least one tape is, for example, releasably adhered to the respective inner surface of the respective middle portion using an adhesive.

According to a further embodiment, one or more pre-cast elements are arranged in the upper portion of the mold, and the middle portion of the mold is arranged adjacent to the one or more pre-cast elements.

Thus, drifting away of resin close to the one or more pre-cast elements can be avoided by the formed barriers.

For example, the one or more pre-cast elements and the fiber lay-up may be connected with each other by resin infusion and curing. For example, the fiber lay-up and at least a connection region of the one or more pre-cast elements and the fiber lay-up are infused with resin to establish the connection.

Pre-cast elements include, for example, a pre-cast (reinforcement) beam such as a spar cap, a leading-edge beam, a trailing-edge beam or another beam.

According to a further embodiment,
each of the at least two electrical heating elements is extending in a longitudinal direction of the mold between a first end of the respective heating element and a second end of the respective heating element,
the first end comprises a first terminal and the second end comprises a second terminal, and
the first and second terminals of each electrical heating element are electrically connected to a power source unit for supplying power to the respective electrical heating element.

The longitudinal direction of the mold is, for example, a direction being parallel to root-tip direction of the to be manufactured blade.

The power source unit comprises, for example, a first and a second terminal (e.g., a positive and a negative terminal). Further, the first and second terminals of each electrical heating element are electrically connected to the first and second terminals of the power source unit, respectively.

The first and second terminals of each electrical heating element are electrically connected to the power source unit for providing a current flow between the first and second terminals of each electrical heating element.

According to a further embodiment, a power source unit for supplying power to the at least two heating elements is arranged outside of the mold, wherein the mold comprises through holes for electrically connecting the at least two electrical heating elements with the power source unit.

The power source unit being arranged outside of the mold means, for example, outside of an inner cavity of the mold.

In the case of a closed mold being closed as seen in cross section, the inner cavity is a closed inner cavity as seen in cross section.

In the case of an open mold being open as seen in cross section (e.g., a mold for casting a blade half shell or a lengthwise section of a blade half shell), the inner cavity is an open inner cavity as seen in cross section.

According to a further embodiment,
the mold comprises an upper mold part and a lower mold part,
the upper mold part is arranged on the lower mold part such that an inner cavity is formed,
the fiber lay-up is arranged in the mold by arranging the fiber lay-up in the upper and lower mold parts, and
the upper mold part comprises the at least two middle portions and the at least one upper portion.

Thus, the mold is configured for casting the entire blade or a lengthwise blade section in one go. Hence, there is no need of gluing half-shells to each other.

The upper mold part is, in particular, arranged on the lower mold part such that, as seen in cross section, a closed inner cavity is formed between them. Hence, the infusion and curing of the resin is performed in a closed state of the mold. In this closed state of the mold, monitoring the resin flow during resin infusion and a potential gravitational drifting of the infused resin is very difficult or impossible. Thus, in this closed state, the forming of the barriers in the at least two middle portions of the blade to avoid gravitational drifting of resin in the first place is of particular advantage.

The mold may further comprise a mandrel (i.e. mold core) arranged between the upper and lower mold parts, i.e. in the closed inner cavity of the mold. The mandrel may comprise two mandrel portions.

According to a further embodiment, at least one vacuum bag is arranged such that it covers the fiber lay-up, vacuum is applied to a space between the mold and the at least one vacuum bag, and the fiber lay-up is infused with resin in a vacuum-assisted manner.

The vacuum bag is, in particular, arranged in step a). Further, the vacuum is applied to said space between steps a) and b).

By infusing the resin into the fiber lay-up in a vacuum-assisted manner, the resin is infused into the space between the mold and the vacuum bag due to the generated vacuum, and is, thus, wetting the fibers.

According to a further aspect a mold arrangement for manufacturing a wind turbine blade is provided. The mold arrangement comprises:
a mold with, as seen in cross section, at least one upper portion, at least two middle portions and a lower portion, and
at least two electrical heating elements arranged at the at least two middle portions for applying heat locally in the at least two middle portions.

The embodiments and features described with reference to the method of the present invention apply mutatis mutandis to the mold arrangement of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a cross-section view of a mold arrangement according to an embodiment for manufacturing a blade of the wind turbine of Fig. 1;
Fig. 3 shows a cross-section view of a mold arrangement according to a further embodiment for manufacturing a blade of the wind turbine of Fig. 1;
Fig. 4 shows a cross-section view of a mold arrangement according to a further embodiment for manufacturing a blade of the wind turbine of Fig. 1;
Fig. 5 shows a cross-section view along line V-V in Fig. 2;
Fig. 6 shows an enlarged cutout VI of Fig. 2;
Fig. 7 shows a view similar as Fig. 6 but with through holes in the mold according to an embodiment;
Fig. 8 shows an enlarged cutout VIII of Fig. 5;
Fig. 9 shows a top view of a portion of a heating element of the mold of Fig. 2 according to an embodiment;
Fig. 10 shows a perspective view of the mold arrangement of Fig. 2; and
Fig. 11 shows a flowchart illustrating a method for manufacturing a wind turbine blade according to an embodiment.

In the Figures, like reference numerals designate like or functionally equivalent elements, unless otherwise indicated.

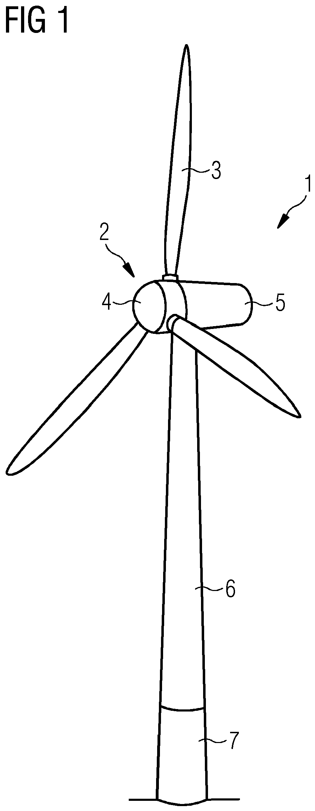

Fig. 1 shows a wind turbine 1 according to an embodiment. The wind turbine 1 comprises a rotor 2 having one or more blades 3 connected to a hub 4. The hub 4 is connected to a generator (not shown) arranged at a nacelle 5. During operation of the wind turbine 1, the blades 3 are driven by wind to rotate and the wind's kinetic energy is converted into electrical energy by the generator at the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

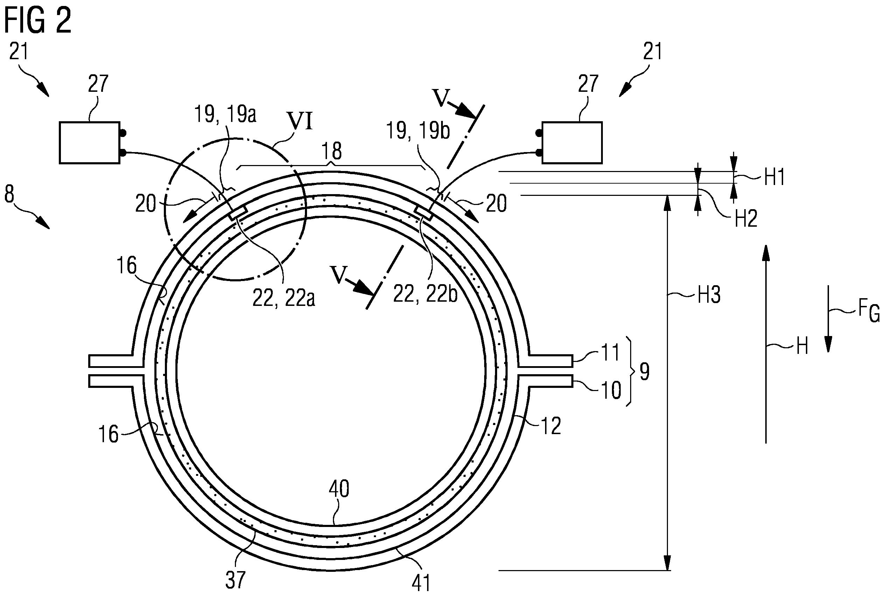

Fig. 2 shows a mold arrangement 8 in cross-section for manufacturing one of the wind turbine blades 3 of Fig. 1. In the embodiment of Fig. 2, the mold arrangement 8 comprises a mold 9 with a lower mold part 10 and an upper mold part 11. In the closed state of the mold 9 shown in Fig. 2, the upper mold part 11 is arranged on the lower mold part 10 such that an inner cavity 12 is formed between them.

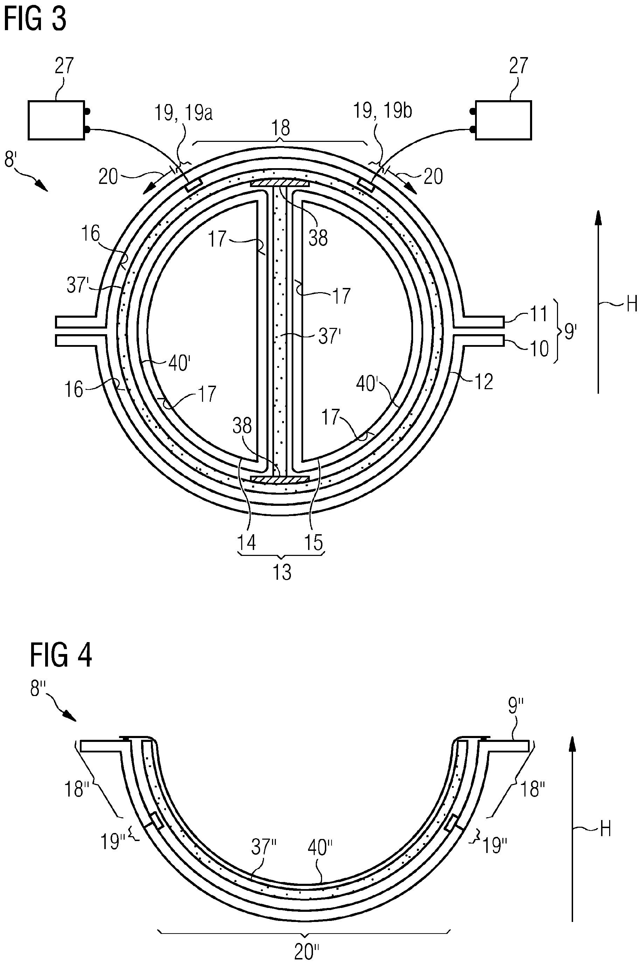

As shown in Fig. 3, the mold arrangement 8', i.e. the mold 9', may further comprise a mandrel 13 arranged inside the cavity 12 formed by the lower and upper mold parts 10, 11. The mandrel 13 is, hence, a mold core. The mandrel 13 comprises, for example, two mandrel parts 14, 15.

The upper and lower mold parts 10, 11 each have a molding surface 16 (Fig. 2).

Further, in the case that a mandrel 13 is provided, also the mandrel 13 (e.g., each of the two mandrel parts 14, 15) has a molding surface 17 (Fig. 3).

As shown in Fig. 4, a mold arrangement 8" for manufacturing one of the wind turbine blades 3 of Fig. 1 may also comprise an open mold 9" in which casting is performed in the open mold 9".

The mold 9 (Fig. 2) comprises, as seen in cross-section, at least one upper portion 18, at least two middle portions 19, 19a, 19b and a lower portion 20.

The upper, middle and lower portions 18, 19, 20 of the mold 9 are upper, middle and lower portions 18, 19, 20 with respect to a height direction H at the casting site. In particular, the mold 9 is subdivided into imaginary height sections H1, H2, H3, namely an upper height section H1, a middle height section H2 and a lower height sections H3. Further, the portion of the mold 9 in the upper height section H1 forms the upper portion 18 of the mold 9. Likewise, the portions of the mold 9 in the middle height section H2 forms the two middle portions 19 of the mold 9. Moreover, the portion of the mold 9 in the lower height section H3 forms the lower portion 20 of the mold 9.

Hence, the upper, middle and lower portions 18, 19, 20 of the mold 9 are upper, middle and lower portions 18, 19, 20 with respect to a gravity force F_{G} acting on casting material 37, 39 inside the mold 9.

In the embodiment shown in Fig. 2, the upper mold part 11 comprises the upper portion 18 and the two middle portions 19. Furthermore, both the upper and lower mold parts 10, 11 comprise the lower portion 20 partially. The case is similar for the mold 9' of Fig. 3. On the other hand, in the embodiment shown in Fig. 4 the single-piece mold 9" comprises two upper portions 18", two middle portions 19" and one lower portion 20".

As shown in Fig. 2, the mold 9 comprises heating means 21 for locally heating the middle portions 19, 19a, 19b of the mold 9. The heating means 21 are, in particular, electrical heating means 21.

The heating means 21 comprise at least two electrical heating elements 22, 22a, 22b for applying heat locally at the two middle portions 19, 19a, 19b. Each of the electrical heating elements 22, 22a, 22b is configured for converting an electrical current I into heat.

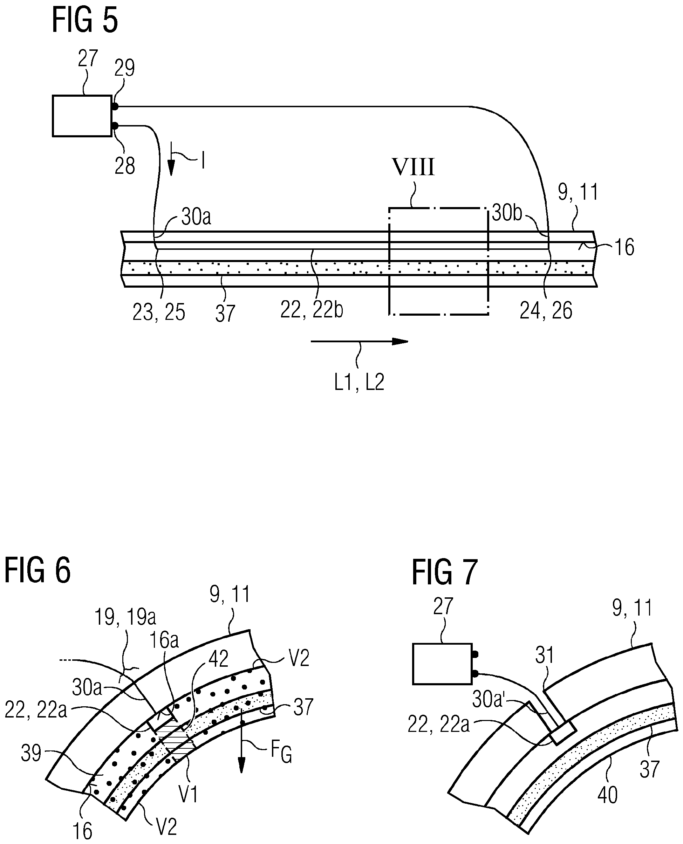

Furthermore, a first electrical heating element 22a is arranged at a first middle portion 19a for applying heat locally at the first middle portion 19a. Further, the first electrical heating element 22a is arranged at a first inner surface 16a (Fig. 6) of the first middle portion 19a, the first inner surface 16 being a portion of the molding surface 16. Likewise, a second electrical heating element 22b is arranged at a second middle portion 19b (e.g., a second inner surface, without reference sign, of the second middle portion 19b) for applying heat locally at the second middle portion 19b.

Fig. 5 shows a cross-section view along line V-V in Fig. 2. In particular, Fig. 5 shows a portion of the upper mold part 11 extending in a longitudinal direction L1 of the mold 9 (which corresponds to a longitudinal direction of the blade 3 to be manufactured).

As can be seen in Fig. 5, the electrical heating element 22b extends in the longitudinal direction L1 of the mold 9 between a first end 23 and a second end 24. The first end 23 comprises a first terminal 25 and the second end 24 comprises a second terminal 26.

The heating means 21 further comprises at least one power source unit 27 for supplying power I to each electrical heating elements 22, 22a, 22b. In particular, the at least one power source unit 27 has a first and a second terminal 28, 29. As shown in Fig. 5, the first terminal 25 of the electrical heating element 22b is electrically connected to the first terminal 28 of the power source unit 27. Likewise, the second terminal 26 of the electrical heating element 22b is electrically connected to the second terminal 29 of the power source unit 27.

In the example of Fig. 2 and 5, the at least one power source unit 27 is arranged outside of the mold 9, i.e. outside of the inner cavity 12 of the mold 9. In this case, the mold 9, i.e. the upper mold part 11, comprises electrical connections 30a, 30b arranged inside a material of the mold 9, i.e. the upper mold part 11. The electrical connections 30a, 30b arranged inside the material of the mold 9 may be embedded in the material of the mold 9 (e.g., casted into the material of the mold 9). Alternatively, the mold 9, i.e. the upper mold part 11, may comprise through holes 31 (Fig. 7) for electrically connecting (electrical connection 30a') the at least two electrical heating elements 22, 22a, 22b with the at least one power source unit 27.

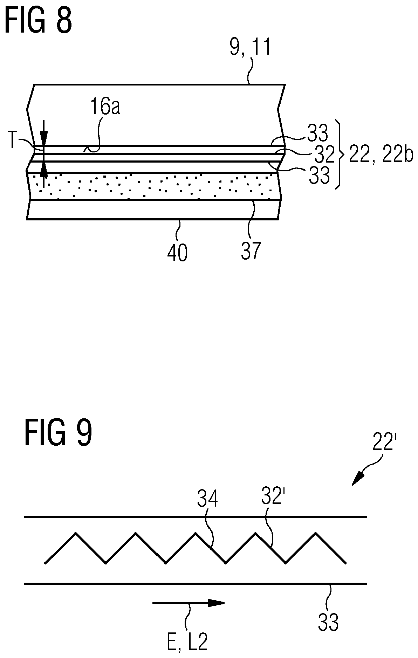

Fig. 8 shows an enlarged view of a cutout VIII of Fig. 5. As can be seen in Fig. 8, each heating element 22, 22a, 22b comprises an electrically conductive element 32. Further, each electrically conductive element 32 comprises the first and second terminals 25, 26 electrically connected to the power source unit 27.

Moreover, each heating element 22, 22a, 22b may comprise one or more tapes 33. In this case the electrically conductive element 32 may be embedded in the one or more tapes 33. Fig. 8 shows an example with two tapes 33, wherein the electrically conductive element 32 is sandwiched between the two tapes 33. However, in other examples, each heating element 22, 22a, 22b may also comprise only one tape 33, wherein the electrically conductive element 32 is arranged on one side of the tape 33.

The at least one tape 33 is attached to the inner surface 16a (Fig. 6) of the respective middle portion 22b of the mold 9. In the case of two or more tapes 33, for example one of the two or more tapes 33 are attached to the inner surface 16a of the respective middle portion 22b.

The at least one tape 33 is, for example, releasably attached to the respective inner surface 16a of the respective middle portion 22b. This allows replacement of the heating element 22, 22a, 22b. For example, a specific heating element 22, 22a, 22b may be used for casting several blades 3 and may be replaced after that.

The at least one tape 33 comprises, for example, a polymer such as polytetrafluorethylene.

The electrical heating elements 22, 22a, 22b may each be configured very thin such that the heating elements 22, 22a, 22b attached to the molding surface 16 of the mold 9 do not leave (significant) indents in the blade shell. For example, a thickness of each electrical heating element 22, 22a, 22b is 2 mm or smaller, 1 mm or smaller and/or 0.5 mm or smaller.

The electrically conductive element 32 may have an elongated shape such as a rectangular plate shape or a shape of a conductive cable. Further, the electrically conductive element 32 may be arranged parallel to a length direction L2 (Fig. 5) of a respective tape 33. The length direction L2 of the respective tape 33 is, in particular, essentially parallel to the length direction L1 of the mold 9.

Alternatively, the electrically conductive element 32' may be arranged in a zig-zag pattern 34 (Fig. 9) and/or a serpentine pattern (not shown). An effective direction E of the pattern 34 is, for example, arranged parallel to the length direction L2 of the respective tape 33. Fig. 9 shows a top view of a cutout of an exemplary heating element 22'.

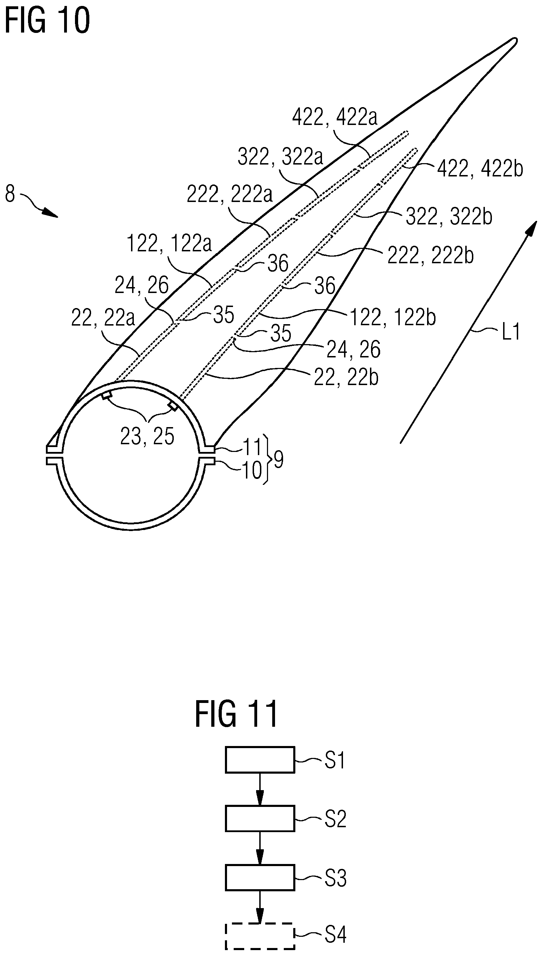

As shown in Fig. 10, the mold 9 (or the mold 9' in Fig. 3 or the mold 9" in Fig. 4) may have multiple pairs of heating elements 22, 122, 222, 322, 422 arranged essentially parallel to the longitudinal direction L1 of the mold 9. In the example of Fig. 10, the multiple pairs of heating elements 22, 122, 222, 322, 422 are arranged back-to-back. In other examples, the multiple pairs of heating elements 22, 122, 222, 322, 422 may also be arranged partially overlappingly.

Each heating element 22, 122, 222, 322, 422 comprises a first and a second terminal 25, 26 electrically connected to the at least one power source unit 27. In Fig. 10, exemplary only the first and a second terminals 25, 26 of the first pair of heating elements 22a, 22b and first and second terminals 35, 36 of the second pair of heating elements 122a, 122b are denoted with reference signs.

In the following, a method for manufacturing a wind turbine blade 3 is described with reference to Fig. 11.

In a first step S1 of the method, a fiber lay-up 37 is arranged in the mold 9.

In the example of Fig. 2, the fiber lay-up 37 is arranged in both the upper and lower mold parts 10, 11 of the mold 9. This also means that the fiber lay-up 37 is arranged in the upper portion 18, the two middle portions 19 and the lower portion 20 of the mold 9.

In the example of Fig. 3, a fiber lay-up 37' is arranged in both the upper and lower mold parts 10, 11 of the mold 9'. Hence, also the fiber lay-up 37' in Fig. 3 is arranged in the upper portion 18, the two middle portions 19 and the lower portion 20 of the mold 9'. In addition, the fiber lay-up 37' may also be arranged in a gap between the mandrel parts 14, 15.

As shown in Fig. 3, during step S1 also one or more pre-cast elements 38 may be arranged in the upper mold part 11 of the mold 9'. For example, two spar caps 38 are arranged in the mold 9', wherein one of the two spar caps 38 is arranged in the upper mold part 11 of the mold 9'. In this case, the middle portions 19, 19a, 19b of the mold 9' may be arranged adjacent to the one or more pre-cast elements 38 in the upper mold part 11.

In the example of Fig. 4, a fiber lay-up 37" is arranged in the mold 9" which is a single mold part. Hence, the fiber lay-up 37" is arranged in the two upper portions 18", the two middle portions 19" and the lower portion 20" of the mold 9".

In a second step S2 of the method, the fiber lay-up 37, 37', 37" is infused with resin 39 (Fig. 6).

The fiber lay-up 37, 37', 37" is, for example, infused with resin 39 in a vacuum-assisted manner. In this case, one or more vacuum bags 40, 40', 40" are arranged such that the one or more vacuum bags 40, 40', 40" cover the fiber lay-up 37, 37', 37". Then, vacuum is applied to a space 41 (Fig. 2) between the mold 9, 9', 9" and the vacuum bag(s) 40, 40', 40". In the next step, resin 39 is provided and drawn into the space 41 by the generated vacuum, whereby the fiber lay-up 37, 37', 37" is infused with the resin 39.

In a third step S3 of the method, the resin 39 is locally heated by means of the heating means 21 (Fig. 2) only in the at least two middle portions 19 of the mold 9 (or the mold 9', 9"). As a result, the resin 39 is locally cured only in the at least two middle portions 19 of the mold 9 but not in the at least one upper portion 18 and the lower portion 20 of the mold (or the mold 9', 9"). The resin 39 locally cured in the at least two middle portions 19 forms a barrier 42 (Fig. 6) in each of the at least two middle portions 19.

In particular, the barrier 42 is a barrier separating the resin 39 in the at least one upper portion 18 and the lower portion 20 of the mold 9 from each other. Thus, having the barriers 42, resin 39 in the at least one upper portion 18 which is still liquid cannot drift due to the gravity force F_{G} towards and into the lower portion 20 of the mold 9.

Moreover, at the end of step S3, a viscosity V1 (Fig. 6) of the cured resin 39 in each middle portion 19 has a larger value than a viscosity V2 of the resin 39 in the at least one upper portion 18 and the lower portion 20 of the mold 9. For example, the cured resin 39 in each middle portion 19 is in a solid and/or gelated state. Further, the resin in the at least one upper portion 18 and the lower portion 20 of the mold 9 is still in a liquid state.

Optionally, step S2 of infusing the fiber lay-up 37, 37', 37" with resin 39 may be firstly fully completed before step S3 of curing the resin 39 locally in the middle portions 19 to form the barriers 42 is started. Fully completing step S2 means, for example, that the entire amount of resin 39 necessary for casting the blade 3 or a lengthwise section of the blade 3 has been infused into the fiber lay-up 37, 37', 37".

Alternatively, step S3 may be started before step S2 is fully completed. This means, for example, that curing the resin 39 locally in the at least two middle portions 19 is started after the fiber lay-up 37, 37', 37" in the mold 9, 9', 9" has been infused with 70% or more, 80% or more and/or 90% or more of the total amount of resin 39 necessary for casting the blade 3 or the lengthwise section of the blade 3.

In any case, step S3 of curing the resin 39 locally in the at least two middle portions 19, 19" is started after the fiber lay-up 37, 37', 37" in the at least one upper portion 18, 18" of the mold 9 is completely wetted by resin 39.

In a fourth step S4 of the method, the remaining resin 39 in the at least one upper portion 18, 18" and the lower portion 20, 20" of the mold 9, 9', 9" is cured, e.g., by applying heat to the at least one upper portion 18, 18" and the lower portion 20, 20".

With the proposed method, in particular by applying step S3 of generating the barriers 42, drifting away of resin 39 from the at least one upper portion 18, 18" due to gravity can be avoided. Hence, dry regions in the at least one upper portion 18, 18" can be prevented. Therefore, the quality of the resin infusion process can be significantly improved.

Although the present invention has been described in accordance with preferred embodiments, it is obvious for the person skilled in the art that modifications are possible in all embodiments.

## Claims

1. A method for manufacturing a wind turbine blade (3), comprising:
a) arranging (S1) a fiber lay-up (37) in a mold (9), the mold (9) having, as seen in cross-section, at least one upper portion (18), at least two middle portions (19) and a lower portion (20),
b) infusing (S2) the fiber lay-up (37) with resin (39), and
c) curing (S3), by applying heat, the resin (39) locally in the at least two middle portions (19) such that in each middle portion (19) a barrier (42), with respect to a gravity force (F_{G}), is formed between the resin (39) in the at least one upper portion (18) and the lower portion (20).

2. The method according to claim 1, wherein at the end of step c)
a viscosity (V1) of the cured resin (39) in each middle portion (19) has a larger value than a viscosity (V2) of the resin (39) in the at least one upper portion (18) and the lower portion (20) of the mold (9), and/or
the cured resin (39) in each middle portion (19) is in a solid and/or gelated state and the resin (39) in the at least one upper portion (18) and the lower portion (20) of the mold (9) is in a liquid state.

3. The method according to claim 1 or 2, wherein
curing the resin (39) locally in the at least two middle portions (19) is started after the fiber lay-up (37) in the at least one upper portion (18) of the mold (9) is completely wetted by resin (39), and/or
curing the resin (39) locally in the at least two middle portions (19) is started after the fiber lay-up (37) in the mold (9) has been infused with 70% or more, 80% or more and/or 90% or more of the total amount of resin (39) necessary for manufacturing the blade (3) or a section of the blade (3).

4. The method according to one of claims 1 to 3, wherein the mold (9) comprises at least two electrical heating elements (22) for applying heat locally at the at least two middle portions (19).

5. The method according to claim 4, wherein the at least two electrical heating elements (22) are arranged at a respective inner surface (16a) of the at least two middle portions (19).

6. The method according to claim 4 or 5, wherein each heating element (22) comprises at least one tape (33) and an electrically conductive element (32) attached to and/or embedded in the at least one tape (33), and the at least one tape (33) is attached to the inner surface (16a) of the respective middle portion (19) of the mold (9).

7. The method according to claim 6, wherein the at least one tape (33) comprises a polymer and/or polytetrafluorethylene.

8. The method according to one of claims 4 to 7, wherein a thickness (T) of each electrical heating element (22) is 2 mm or smaller, 1 mm or smaller and/or 0.5 mm or smaller.

9. The method according to one of claims 6 to 8, wherein the at least one tape (33) is releasably attached to the respective inner surface (16a) of the respective middle portion (19).

10. The method according to one of claims 1 to 9, wherein one or more pre-cast elements (38) are arranged in the upper portion (18) of the mold (9), and the middle portion (19) of the mold (9) is arranged adjacent to the one or more pre-cast elements (38).

11. The method according to one of claims 4 to 10, wherein
each of the at least two electrical heating elements (22) is extending in a longitudinal direction (L1) of the mold (9) between a first end (23) of the respective heating element (22) and a second end (24) of the respective heating element (22),
the first end (23) comprises a first terminal (25) and the second end (24) comprises a second terminal (26), and
the first and second terminals (25, 26) of each electrical heating element (22) are electrically connected to a power source unit (27) for supplying power (I) to the respective electrical heating element (22).

12. The method according to claim 4 to 11, wherein a power source unit (27) for supplying power (I) to the at least two heating elements (22) is arranged outside of the mold (9), and the mold (9) comprises through holes (31) for electrically connecting the at least two electrical heating elements (22) with the power source unit (27).

13. The method according to one of claims 1 to 12, wherein
the mold (9) comprises an upper mold part (11) and a lower mold part (10),
the upper mold part (11) is arranged on the lower mold part (10) such that an inner cavity (12) is formed,
the fiber lay-up (37) is arranged in the mold (9) by arranging the fiber lay-up (37) in the upper and lower mold parts (10, 11), and
the upper mold part (11) comprises the at least two middle portions (19) and the at least one upper portion (18).

14. The method according to one of claims 1 to 13, wherein at least one vacuum bag (40) is arranged such that it covers the fiber lay-up (37), vacuum is applied to a space (41) between the mold (9) and the at least one vacuum bag (40), and the fiber lay-up (37) is infused with resin (39) in a vacuum-assisted manner.

15. A mold arrangement (8) for manufacturing a wind turbine blade (3), comprising
a mold (9) with, as seen in cross section, at least one upper portion (18), at least two middle portions (19) and a lower portion (20), and
at least two electrical heating elements (22) arranged at the at least two middle portions (19) for applying heat locally in the at least two middle portions (19).
